# EUROPEAN PATENT SPECIFICATION

(11) **EP 3 804 961 B1**
(45) Date of publication and mention of the grant of the patent: **19.07.2023**
(21) Application number: 19202232.5
(22) Date of filing: 09.10.2019
(51) Int. Cl.: B29C 53/74, B29C 53/58, B29L 23/00

(54) **APPARATUS AND METHOD FOR PRODUCING TUBES**
VORRICHTUNG UND VERFAHREN ZUR HERSTELLUNG VON ROHREN
APPAREIL ET PROCÉDÉ DE PRODUCTION DE TUBES

(43) Date of publication of application: 14.04.2021
(73) Proprietor: Amiblu Technology AS, 3241 Sandefjord (NO)
(72) Inventor: Kurzych, Krzysztof, 83-330 Zukowo (PL)
(74) Representative: Schneider, Sascha

(56) References cited:
- WO-A1-2010/075329
- US-A- 3 464 879
- US-A- 4 110 149

## Description

The invention embodies an equipment for extrusion and/or winding of resin, thermoplastic or thermosetting tubes or pipes of infinite lengths. The equipment comprises a supporting structure such as a hollow core pipe open at the ends, around which an endless band carrying the plastic pipe can be fed. The band follows a helical path so that the coils of the band lie close together, and upon reaching the extreme end of the core pipe, the band feeds inside the hollow interior, and at the inner end is redirected to start the helical path again. The invention further embodies a process of extruding and/or winding the plastic pipe onto the equipment.

The mould in a continuous filament winding (CFW) process consists of plates mounted on to a central rotating shaft and a steel band wraps onto the plates to form the external surface on which materials forming thermosetting plastic (GRP) pipe laminate are applied and cured. Reinforcement is possible using e.g. glass, carbon or basalt. The point at which the steel band leaves the pipe mould, enters the hollow rotating mould to return to the start of the cylinder and re-enter to form the mould surface again, is a critical process. The stability of this so called `return head' (the apparatus to permit the steel band to leave and to be redirected into the hollow cylinder) is critical for pipe quality and a continuous effective process with mould integrity has resulted in a rigid, stationary, return head with solid steel rods to support the steel band, bear the laminate and redirect the steel band.

Such an apparatus is known from document US 3,979,250. It is therefore the object of the present invention to provide an improved apparatus and an improved method that produce tubes of resin material. WO2010075329 discloses an apparatus for producing tubular products.

The present object is achieved using the features of the independent claims.

Advantageous developments of the invention are specified in the dependent claims.

According to the invention an apparatus for producing tubes of resin material is provided, the apparatus having a hollow supporting structure, wherein an endless carrier strip is windable around the outside of the supporting structure in a plurality of adjacent windings to form a mould, wherein the apparatus comprises application means for applying a resin material on the outside of the mould, the apparatus further comprises a return head for supporting the carrier strip after leaving the supporting structure and for feeding the carrier strip into the interior of the supporting structure, wherein the return head comprises variable-length elements for supporting the carrier strip.

As a further object of the invention, the invention refers to a method for producing resin tubes, wherein an endless carrier strip is wound around an outside of a hollow supporting structure in a plurality of adjacent windings to form a mould, wherein a resin material is applied on the outside of the mould, wherein a return head supports the carrier strip after leaving the supporting structure and feeds the carrier strip into the interior of the supporting structure, wherein the return head comprises variable-length elements for supporting the carrier strip.

As an advantage of the invention, the return head can adapt to the radial position of the carrier strip and therefore provides an optimal support of the carrier strip when leaving the support structure and feeding into the interior of the supporting structure.

As further advantages the invention provides higher quality and better longlife characteristics of the tube, increased lifetime of the carrier strip due to less fatigue at the return, a reduced carrier strip overlap and a higher production speed.

The feature resin also comprises thermoplastic and/or thermosetting material-
In a preferred embodiment, the variable-length elements comprise pressure elements for pressing the carrier strip radially outwards. As an advantage, the carrier strip is pressed against the resin material and the carrier strip's tension and position can be maintained.

In the following "radial" or "radially" means the perpendicular direction in relation to a longitudinal axis extending through the inside of the supporting structure.

According to another advantageous exemplary preferred embodiment the variable-length elements comprise length-adjustable support rods. As an advantage, support rods adapt optimally to the position of the carrier strip.

According to another advantageous exemplary preferred embodiment the variable-length elements comprise carrier strip supports, preferably rollers, mounted at the radial outer ends of movable pistons. As an advantage, the strip supports provide optimal force transmission to the carrier strip.

According to another advantageous exemplary preferred embodiment the variable-length elements are movable in radial directions, especially between inner and outer positions. As an advantage, the carrier strip can be optimally supported in radial direction.

According to another advantageous exemplary preferred embodiment the variable-length elements are movable in cylinders fixed on a return head disk extending perpendicular to a longitudinal axis of the supporting structure. As an advantage, the variable-length elements are arranged optimally and can move in radial direction.

According to another advantageous exemplary preferred embodiment the variable-length elements vary between preselected maximum and minimum distances depending on the radial distance between the carrier strip and the longitudinal axis of the supporting structure. As an advantage, the carrier strip can be optimally supported in any distance from the longitudinal axis.

According to another advantageous exemplary preferred embodiment the variable-length elements exert forces on the carrier strip against the resin material and maintain the carrier strip's tension and position. As an advantage, the carrier strip can be held in optimal position.

According to another advantageous exemplary preferred embodiment the variable-length elements comprise pneumatic, spring, hydraulic, magnetic and/or mechanical actuators.

According to another advantageous exemplary preferred embodiment the apparatus comprises a motor with a motor house and a camplate equipped with carrier strip pushers to ensure that the carrier strip is guided onto the mould and that the entering carrier strip is tightly pushed onto the preceding carrier strip on the mould.

According to another advantageous exemplary preferred embodiment the resin material application is controlled with respect to kg/min and/or surface area passing below a material application zone to ensure that the correct quantities (kg/cm3) are applied to the mould. This ensures that the material feeding is more dynamic and controlled with respect to mould rotation, circumferential speed and tube longitudinal production speed.

According to another advantageous exemplary preferred embodiment saw cutting of the resin tubes is synchronised with respect to the mould geometry and the tube longitudinal production speed. Preferably the saw permits a two-axis movement, which is movement into the tube surface at varying distance between a rotating saw blade and the tube exterior and in the direction of the tube production as the tube lengths on each rotation during the sawing process.

According to another advantageous exemplary preferred embodiment there is a dynamic positioning of the material application zone with respect to a constant height above the rotating tube surface and an external heating source movement relative to the rotating tube surface to ensure a constant distance of the external heating source to the carrier strip and/or the tube exterior.

In use of the apparatus, tubular resin articles such as pipes may be formed in a variety of ways, for instance by the winding on the moving carrier strip fibrous reinforcements (e.g. glass fibers) impregnated with a heat hardenable liquid resin material, the tubular article thus formed being solidified, for instance by positioning a portion of the helical path of the carrier strip in an oven. Alternatively, various kinds of resin materials may be applied to the carrier surface provided by the helical turns of the carrier strip, for instance by extrusion of a thermoplastic resin, which may be effected by positioning a portion of the helical path of the carrier strip in an extruder nozzle or crosshead providing for extrusion of a cylindrical body of softened thermoplastic resin material on the moving surface. The apparatus is preferably of such length that provision is made for the hardening of the resin material while it is still supported upon the surface formed by the carrier strip. In the case of a thermoplastic resin this hardening may be accelerated by the use of cooling means.

In various uses of the equipment, the supporting structure for the carrier band may either be rotatively mounted or non-rotatively mounted as will further be explained hereinafter.

The continuous support of the carrier band has the consequence that plastic pipes manufactured--either by extrusion or by winding--on the outer surface of the carrier band will be perfectly smooth and curved inside. The outer surface of the core pipe is polished, and as mentioned it is not provided with any radially protruding supporting devices (as the already known core pipe). Therefore it is very light.

In one embodiment of the equipment, where the core pipe is mounted for rotation about its longitudinal axis, it is contemplated that the driving devices are arranged in such a way that they can turn the core pipe at a circumferential velocity which is equal to the velocity of and turning in the opposite direction as compared with the turns of the band, when the velocity is measured in the cross section of the core pipe, in view of which the turns are only moved axially along the outer surface of the core pipe.

This version is particularly advantageous when it is required that the manufactured plastic pipe as it is being delivered from the equipment, be mounted or laid down in the ground and therefore must not rotate.

The core pipe may be of a rugged cantilever construction resting on a central hollow axis which is open at its extreme outer end through which the carrier band can pass after having left the outer surface of the core pipe, and at which axis there may be a hole through which the carrier band is taken out so that it can reach some guides to engage and direct the band to the outer surface of the core pipe at its innermost end. The driving devices may comprise a motor provided with a gearing device coupled to the axis. All technically possible combinations and/or permutations as well as duplications of the functional and/or material parts of the device and the changes associated therewith are deemed to be disclosed in at least one of the method steps or methods, without departing from the scope of the invention as defined by the appended claims.

Inasmuch as process features are disclosed in the above text or in the subsequent description of the figures, the latter are also deemed to be disclosed as features of the method and vice versa.

Further advantages, features and details of the invention will emerge from the following description of preferred examples of embodiment and with the aid of the drawings. In the figures:
- Figure 1: shows a diagrammatic representation of an embodiment of an apparatus according to the invention in a side view,
- Figure 2: shows a diagrammatic representation of a part of a return head the apparatus in a front view, and
- Figure 3: shows the return head of Fig. 1 in a side view.

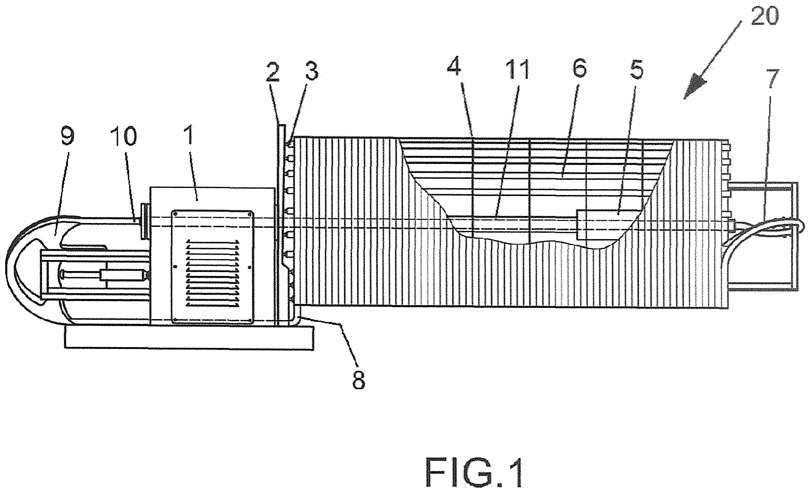

The apparatus 20 according to the invention in Fig.1 comprises a drive housing 1, a pusher guide cam plate 2, a steel band pusher 3, a set of several mandrel discs 4, spacer tubes 5, aluminium beams 6, a steel band tensioning apparatus 9, a steel band return tube 10 and a main shaft 11. The mandrel discs 4 are plates that are mounted on a central rotating shaft.

For a better representation Fig. 1 also shows a sectional view of the apparatus 20 in order to illustrate the mandrel discs 4, the spacer tubes 5, the aluminium beams 6 and the main shaft 11.

An endless steel band 8 (also called carrier strip) is wound around the mandrel discs 4 (also called supporting structure) to form the external surface of a mould for a resin, which is applied onto the steel band 8. After the resin is applied onto the mould, the resin is cured to form the resin tube.

The carrier strip 8 leaves the mould, enters the hollow rotating mould and returns to the start of the apparatus 20 to form the mould surface again.

The apparatus 20 further comprises a steel band return head 7. The return head 7 carries the carrier strip 8 when the carrier strip 8 leaves the mould and enters the hollow rotating mould to return to the start of the supporting structure 4.

The steel band 8 is pulled forward by a motor (not shown) inside the drive housing 1. Having passed the right extreme end of the apparatus 20, the band 8 is fed into the hollow interior of the apparatus 20. The endless steel band 8 runs through the inside of the supporting structure 4 and runs out of the apparatus 20 at its left end from which point it is redirected onto the outer surface of the mandrel discs 4. A spring-loaded rail ensures that the band 8 has the proper tension.

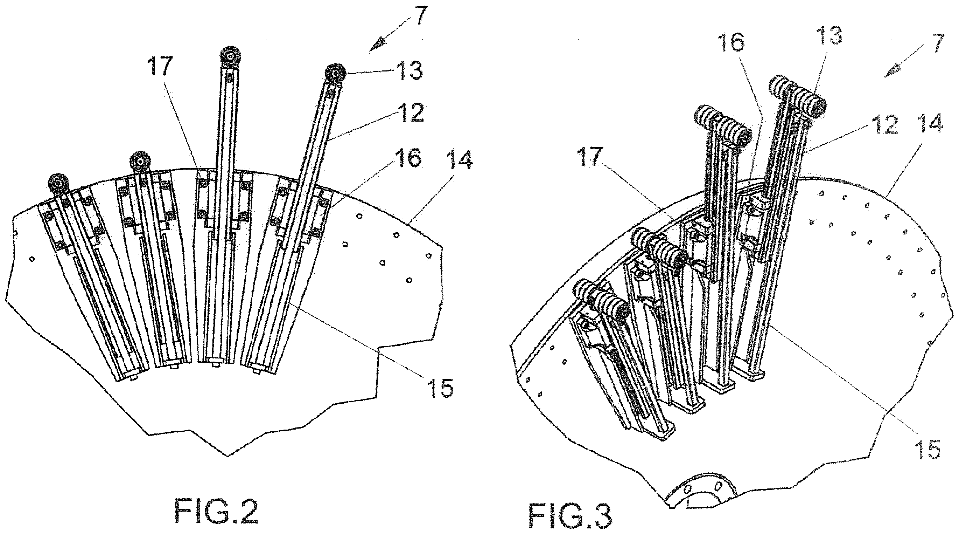

Fig. 2 shows a diagrammatic representation of a section of the return head 7 in a front view, and Figure 2 shows the return head 7 of Fig. 1 in a side view.

The return head 7 comprises variable-length elements 12, 13 for supporting the carrier strip 8. In this embodiment the variable-length elements 12, 13 comprise pressure elements, wherein the pressure elements comprise movable pistons 12 and rollers 13. The rollers 13 are arranged at the radial outer ends of the pistons 12. The pistons 12 can move in radial direction between a radial inner position (the two pistons 12 on the left side) and a radial outer position (the two pistons 12 on the right side). Thus, the pistons 12 can be moved in radial directions with respect to the axis that extends through the inside of the apparatus 20.

The return head 7 further comprises a return head disk 14. The return head disk 14 extends perpendicular to the longitudinal axis of the supporting structure 4. The pistons 12 are movable in cylinders 15, which in turn are fixed to the disk 14 by brackets 16. The brackets 16 are fixed to the disk 14 by bolts 17 that are received and fixed in openings in the disk 14.

In operation the return head 7 with its varying length support pistons 12 follows carrier strip 8, i.e. the mould. The lengths of the pistons 12 vary dependent on the mould passing and between preselected maximum and minimum distances to the centre point of the rotating shaft. The pistons 12 are so designed to return automatically to their longest length, wherein this length is equal to the greatest distance from the centre of the rotating shaft required for the mould geometry.

The pipe mould, with the manufactured pipe laminate, restrains the full extension of the pistons 12 so in turn, the pistons 12 exerts a force on the steel band against the GRP laminate and maintains the steel band tension and position. The minimum length of the pistons 12 is defined by the required minimum distance of the mould distance from the rotating shaft's central axis.

The pistons 12 can thereby follow the external geometry of the mould and support the steel band at all positions along the movement from minimum to maximum extension of the pistons 12.

The pistons' 12 position is controlled by suitable means and may include, but is not necessarily limited to, pneumatic, spring, hydraulic, magnetic or mechanical position control.

### List of reference numbers

- 1: drive housing
- 2: pusher guide cam plate
- 3: steel band pusher
- 4: mandrel disc
- 5: spacer tube
- 6: aluminium beams 6
- 7: steel band return head
- 8: steel band
- 9: steel band tensioning apparatus
- 10: steel band return tube
- 11: main shaft
- 12: pistons
- 13: rollers
- 14: return head disk
- 15: cylinders
- 16: brackets
- 17: bolts
- 20: apparatus for producing tubes

## Claims

1. Apparatus (20) for producing resin tubes, the apparatus (20) having a hollow supporting structure (4), wherein an endless carrier strip (8) is windable around the outside of the supporting structure (4) in a plurality of adjacent windings to form a mould, wherein the apparatus (20) comprises application means for applying a resin material on the outside of the mould, the apparatus (20) further comprises a return head (7) for supporting the carrier strip (8) after leaving the supporting structure (4) and for feeding the carrier strip (8) into the interior of the supporting structure (4), **characterized in that** the return head (7) comprises variable-length elements (12, 13) for supporting the carrier strip (8).

2. Apparatus (20) according to claim 1, wherein the variable-length elements (12, 13) comprise pressure elements for pressing the carrier strip (8) radially outwards.

3. Apparatus (20) according to at least one of the preceding claims, wherein the variable-length elements (12, 13) comprise length-adjustable support rods.

4. Apparatus (20) according to at least one of the preceding claims, wherein the variable-length elements (12, 13) comprise carrier strip supports (13), preferably rollers, mounted at the radial outer ends of movable pistons (12).

5. Apparatus (20) according to at least one of the preceding claims, wherein the variable-length elements (12, 13) are movable in radial directions, especially between inner and outer positions.

6. Apparatus (20) according to at least one of the preceding claims, wherein the variable-length elements (12, 13) are movable in cylinders (15) fixed on a return head disk (14) extending perpendicular to a longitudinal axis of the supporting structure (4).

7. Apparatus (20) according to at least one of the preceding claims, wherein the variable-length elements (12, 13) vary between preselected maximum and minimum distances depending on the radial distance between the carrier strip (8) and the longitudinal axis of the supporting structure (4).

8. Apparatus (20) according to at least one of the preceding claims, wherein the variable-length elements (12, 13) exert forces on the carrier strip (8) against the resin material and maintain the carrier strip's (8) tension and position.

9. Apparatus (20) according to at least one of the preceding claims, wherein the variable-length elements (12, 13) comprise pneumatic, spring, hydraulic, magnetic and/or mechanical actuators.

10. Method for producing resin tubes, especially using an apparatus according to at least one of the preceding claims, wherein an endless carrier strip (8) is wound around an outside of a hollow supporting structure (4) in a plurality of adjacent windings to form a mould, wherein a resin material is applied on the outside of the mould, wherein a return head (7) supports the carrier strip (8) after leaving the supporting structure (4) and feeds the carrier strip (8) into the interior of the supporting structure (4), **characterized in that** the return head (7) comprises variable-length elements (12, 13) for supporting the carrier strip (8).

## Patentansprüche

1. Vorrichtung (20) zum Erzeugen von Harzrohren, wobei die Vorrichtung (20) eine hohle Stützstruktur (4) aufweist, wobei ein Endlosträgerband (8) zum Ausbilden einer Form in mehreren benachbarten Wicklungen um die Außenseite der Stützstruktur (4) wickelbar ist, wobei die Vorrichtung (20) Aufbringungsmittel zum Aufbringen eines Harzmaterials auf die Außenseite der Form umfasst, wobei die Vorrichtung (20) ferner einen Rückführkopf (7) zum Stützen des Trägerbands (8), nachdem es die Stützstruktur (4) verlassen hat, und zum Zuführen des Trägerbands (8) in das Innere der Stützstruktur (4) umfasst, **dadurch gekennzeichnet, dass** der Rückführkopf (7) Elemente (12, 13) mit variabler Länge zum Stützen des Trägerbands (8) umfasst.

2. Vorrichtung (20) nach Anspruch 1, wobei die Elemente (12, 13) mit variabler Länge Druckelemente zum Pressen des Trägerbands (8) radial nach außen umfassen.

3. Vorrichtung (20) nach zumindest einem der vorhergehenden Ansprüche, wobei die Elemente (12, 13) mit variabler Länge längenverstellbare Stützstangen umfassen.

4. Vorrichtung (20) nach zumindest einem der vorhergehenden Ansprüche, wobei die Elemente (12, 13) mit variabler Länge Trägerbandstützen (13), vorzugsweise Walzen, umfassen, die an den radialen äußeren Enden von beweglichen Kolben (12) angebracht sind.

5. Vorrichtung (20) nach zumindest einem der vorhergehenden Ansprüche, wobei die Elemente (12, 13) mit variabler Länge in radialen Richtungen, insbesondere zwischen Innen- und Außenpositionen, beweglich sind.

6. Vorrichtung (20) nach zumindest einem der vorhergehenden Ansprüche, wobei die Elemente (12, 13) mit variabler Länge in Zylindern (15) beweglich sind, die an einer Rückführkopfscheibe (14) befestigt sind, welche senkrecht zu einer Längsachse der Stützstruktur (4) verläuft.

7. Vorrichtung (20) nach zumindest einem der vorhergehenden Ansprüche, wobei die Elemente (12, 13) mit variabler Länge abhängig vom radialen Abstand zwischen dem Trägerband (8) und der Längsachse der Stützstruktur (4) zwischen vorausgewählten Maximal- und Minimalabständen variieren.

8. Vorrichtung (20) nach zumindest einem der vorhergehenden Ansprüche, wobei die Elemente (12, 13) mit variabler Länge Kräfte auf das Trägerband (8) gegen das Harzmaterial ausüben und die Spannung und Position des Trägerbands (8) aufrechterhalten.

9. Vorrichtung (20) nach zumindest einem der vorhergehenden Ansprüche, wobei die Elemente (12, 13) mit variabler Länge pneumatische, gefederte, hydraulische, magnetische und/oder mechanische Stellglieder umfassen.

10. Verfahren zum Erzeugen von Harzrohren, insbesondere unter Benutzung einer Vorrichtung nach zumindest einem der vorhergehenden Ansprüche, wobei ein Endlosträgerband (8) zum Ausbilden einer Form in mehreren benachbarten Wicklungen um die Außenseite einer hohlen Stützstruktur (4) gewickelt wird, wobei ein Harzmaterial auf die Außenseite der Form aufgebracht wird, wobei ein Rückführkopf (7) das Trägerband (8), nachdem es die Stützstruktur (4) verlassen hat, stützt und das Trägerband (8) in das Innere der Stützstruktur (4) zuführt, **dadurch gekennzeichnet, dass** der Rückführkopf (7) Elemente (12, 13) mit variabler Länge zum Stützen des Trägerbands (8) umfasst.

## Revendications

1. Appareil (20) pour la production de tubes en résine, l'appareil (20) comportant une structure de support creuse (4), dans lequel une bande de transport sans fin (8) peut être enroulée autour de l'extérieur de la structure de support (4) en une pluralité d'enroulements adjacents pour former un moule, dans lequel l'appareil (20) comprend des moyens d'application pour appliquer un matériau en résine sur l'extérieur du moule, l'appareil (20) comprend en outre une tête de retour (7) pour soutenir la bande de transport (8) après avoir quittée la structure de support (4) et pour introduire la bande de transport (8) à l'intérieur de la structure de support (4), **caractérisé en ce que** la tête de retour (7) comprend des éléments de longueur variable (12, 13) pour soutenir la bande de transport (8).

2. Appareil (20) selon la revendication 1, dans lequel les éléments de longueur variable (12, 13) comprennent des éléments de pression pour presser la bande de transport (8) radialement vers l'extérieur.

3. Appareil (20) selon au moins l'une des revendications précédentes, dans lequel les éléments de longueur variable (12, 13) comprennent des tiges de support réglables en longueur.

4. Appareil (20) selon au moins l'une des revendications précédentes, dans lequel les éléments de longueur variable (12, 13) comprennent des supports de bandes porteuses (13), de préférence des rouleaux, montés aux extrémités extérieures radiales des pistons mobiles (12).

5. Appareil (20) selon l'une au moins des revendications précédentes, dans lequel les éléments de longueur variable (12, 13) sont mobiles dans les directions radiales, notamment entre les positions intérieure et extérieure.

6. Appareil (20) selon au moins l'une des revendications précédentes, dans lequel les éléments de longueur variable (12, 13) sont mobiles dans des cylindres (15) montés sur un disque de tête de renvoi (14) s'étendant de manière perpendiculaire à un axe longitudinal de la structure porteuse (4).

7. Appareil (20) selon l'une au moins des revendications précédentes, dans lequel les éléments de longueur variable (12, 13) varient entre des distances maximales et minimales présélectionnées en fonction de la distance radiale entre la bande de transport (8) et l'axe longitudinal de la structure de support (4).

8. Appareil (20) selon au moins l'une des revendications précédentes, dans lequel les éléments de longueur variable (12, 13) exercent des forces sur la bande de transport (8) contre le matériau de résine et maintiennent la tension et la position de la bande de transport (8).

9. Appareil (20) selon au moins l'une des revendications précédentes, dans lequel les éléments de longueur variable (12, 13) comprennent des actionneurs pneumatiques, à ressort, hydrauliques, magnétiques et/ou mécaniques.

10. Procédé de production de tubes en résine, spécialement à l'aide d'un appareil selon l'une quelconque des revendications précédentes, dans lequel une bande de transport sans fin (8) est enroulée autour d'un extérieur de la structure de support creuse (4) en une pluralité d'enroulements adjacents pour former un moule, dans lequel un matériau en résine est appliqué sur l'extérieur du moule, dans lequel une tête de retour (7) soutient la bande de transport (8) après avoir quittée la structure de support (4) et introduit la bande de transport (8) à l'intérieur de la structure de support (4), **caractérisé en ce que** la tête de retour (7) comprend des éléments de longueur variable (12, 13) pour soutenir la bande de transport (8).
